# EUROPÄISCHE PATENTSCHRIFT

(11) **EP 1 311 915 B1**
(45) Veröffentlichungstag und Bekanntmachung des Hinweises auf die Patenterteilung: **30.04.2008**
(21) Anmeldenummer: 01964887.2
(22) Anmeldetag: 09.08.2001
(51) Int. Cl.: G05B 19/042, G05B 19/409

(54) **SYSTEM UND VERFAHREN ZUR GENERIERUNG EINES PRÜFSYSTEMS MIT TEMPORÄR VERSCHALTBAREN KOMPONENTEN**
SYSTEM AND METHOD FOR GENERATING A TEST SYSTEM WITH TEMPORARILY INTERCONNECTABLE COMPONENTS
SYSTEME ET PROCEDE POUR GENERER UN SYSTEME DE CONTROLE AVEC DES COMPOSANTS POUVANT ETRE CONNECTES TEMPORAIREMENT

(30) Priorität: 22.08.2000 DE 10041106; 02.04.2001 DE 10116332
(43) Veröffentlichungstag der Anmeldung: 21.05.2003
(73) Patentinhaber: SIEMENS AKTIENGESELLSCHAFT, 80333 München (DE)
(72) Erfinder: SPORBERT, Andreas, 90475 Nürnberg (DE); FRIEDRICH, Wolfgang, 91088 Bubenreuth (DE); KIESEL, Bruno, 91058 Erlangen (DE)
(86) Internationale Anmeldenummer: PCT/DE2001/003043
(87) Internationale Veröffentlichungsnummer: WO 2002/017025

(56) Entgegenhaltungen:
- DE-A- 4 113 556
- DE-A- 19 641 924
- DAUDE R ET AL: "HEAD-MOUNTED DISPLAY ALS FACHARBEITERORIENTIERTE UNTERSTUETZUNGSKOMPONENTE AN CNC-WERKZEUGMASCHINEN" WERKSTATTSTECHNIK, SPRINGER VERLAG. BERLIN, DE, Bd. 86, Nr. 5, 1. Mai 1996 (1996-05-01), Seiten 248-252, XP000585192 ISSN: 0340-4544

## Beschreibung

Die Erfindung betrifft ein System und ein Verfahren zur Generierung eines Prüfsystems, sowie eine mobile Rechnereinheit zur Verwendung in einem solchen System bzw. Verfahren.

Ein derartiges System und Verfahren kommt beispielsweise im Bereich der Automatisierungstechnik, bei Produktions- und Werkzeugmaschinen, bei Diagnose-/Serviceunterstützungssystemen sowie für komplexe Komponenten, Geräte und Systeme, wie beispielsweise Fahrzeuge und industrielle Maschinen und Anlagen zum Einsatz. Eine besonders vorteilhafte Anwendung besteht im Zusammenhang mit Augmented Reality (= AR = "erweiterte Realität"), einer neuen Form der Mensch-Technik-Interaktion, bei der dem Anwender Informationen in sein Sichtfeld eingeblendet werden - beispielweise über eine Datenbrille. Die Einblendung geschieht jedoch kontextabhängig, d. h. passend und abgeleitet vom betrachteten Objekt, z. B. einem Bauteil. So wird das reale Sichtfeld beispielsweise eines Monteurs durch eingeblendete Montagehinweise um für ihn wichtige Informationen erweitert. In diesem Falle kann Augmented Reality unter anderem das herkömmliche Montagehandbuch ersetzen.

Der hier vorgestellte Lösungsansatz bezieht sich auf den Einsatz von Augmented Reality (AR) in der Montage sowie im Bereich Service und Wartung.

Der Erfindung liegt folgendes Problem zugrunde: Die Endprüfung von Produkten (Fahrzeugen) geschieht mit einer Menge von einzelnen Komponenten (Prüfrechner, Fahrzeugadapter, Messadapter, mobiles Prüfsystem), die für jeden individuellen Prüfling (Fahrzeug) neu zugeordnet werden müssen. Weiterhin ist der Prüfer während des Ablaufs der Prüfung an den Prüfling fest gebunden. In Zukunft ist von einer Verlängerung und Automatisierung der einzelnen Prüfabläufe auszugehen. Dies führt nicht nur zu einer Verlängerung der Komplettprüfung eines Fahrzeugs, sondern auch zu einem höheren Ressourcenbedarf durch die längere Bindung des Prüfers.

Aus Daude, R. et al.: "Head-Mounted Display als facharbeiterorientierte Unterstützungskomponente an CNC-Werkzeugmaschinen", wt-Produktion und Management 86 (1996), 248-252, Springer-Verlag, Berlin, DE ist der Einsatz von Datenbrillen zur Darstellung von maschinenrelevanter Information für einen Benutzer bekannt.

Aus DE 41 13 556 A1 ist ein System zur Beseitigung von in einer Fertigung aufgetretenen Fehlern auf einer Korrekturstrasse mit mehreren Korrekturstationen bekannt, wobei die in der Fertigungsstrasse ermittelten Fehler in Form von Daten auf einem dem Werkstück mitgegebenen Datenträger gespeichert werden und an den Korrekturstationen ausgelesen und als Korrekturbefehle ausgegeben werden.

Der Erfindung liegt die Aufgabe zugrunde, ein System sowie ein Verfahren anzugeben, das eine einfache Verschaltung der für eine Prüfung benötigten Geräte mit dem zu prüfenden Produkt ermöglicht sowie die Bewegungsfreiheit des Prüfers erhöht.

Diese Aufgabe wird gelöst durch ein System, ein Verfahren, sowie eine mobile Rechnereinheit mit den in den Ansprüchen 1, 5 und 9 genannten Merkmalen.

Eine vorteilhafte Ausgestaltung des erfindungsgemäßen Systems besteht darin, dass der Prüfrechner, der mobile Diagnoseadapter und die mobile Rechnereinheit als mobiles Prüfsystem in einer baulichen Einheit zusammengefasst werden und dass mobile Peripheriegeräte als Schnittstelle zwischen dem mobilen Prüfsystem und dem Prüfer vorgesehen sind. Die Kommunikation zwischen den Komponenten innerhalb des mobilen Prüfsystems und zwischen den mobilen Peripheriegeräten und dem mobilen Prüfsystem kann drahtlos erfolgen.

Um eine Verschaltung der mobilen Rechnereinheit mit jeweils genau einem Prüfsystem zu einem bestimmten Zeitpunkt zu erreichen, wird vorgeschlagen, ein einem Prüfling zugeordneten Kommunikationsbereich und einen Kernbereich innerhalb des Kommunikationsbereichs vorzusehen, wobei ein Wechsel der Verschaltung der mobilen Rechnereinheit nur innerhalb des Kernbereichs erfolgen kann und wobei eine Kommunikation zwischen der mobilen Rechnereinheit und dem temporär verschaltbaren Prüfsystem nur innerhalb des Kommunikationsbereichs vorgesehen ist.

Bei Ausstattung des mobilen Diagnoseadapters mit Ein- und Ausgabemittel zum Bedienen und Beobachten des mobilen Diagnoseadapters eröffnet sich die Möglichkeit, auf die mobile Rechnereinheit zu verzichten und das Prüfsystem direkt über den mobilen Diagnoseadapter zu bedienen und zu beobachten. Diese Bedienmöglichkeit bietet sich insbesondere als Rückfallebene im Störungsfall an.

Im Folgenden wird die Erfindung anhand der in den Figuren dargestellten Ausführungsbeispiele näher beschrieben und erläutert.

Es zeigen:
- FIG 1: eine erste Variante "Stationäres Prüfsystem" zur Konfiguration eines Prüfsystems,
- FIG 2: eine zweite Variante "Mobiles Prüfsystem" zur Konfiguration eines Prüfsystems und
- FIG 3: eine Skizze zur Visualisierung von Kommunikations- und Kernbereich.

Bei heutigen Lösungen werden die Prüfmittel zu Beginn der Prüfung einmal fest zugeordnet. Diese Zuordnung bleibt bis zum Ende erhalten. Für eine derzeit realisierte Ausführung besteht das Prüfsystem aus den Komponenten:
● Prüfrechner (stationär)
● Mobiles Prüfsystem / Handterminal
● Mobiler Diagnoseadapter 3
● Batterie-Adapter / Messadapter 4

Ein solches Prüfsystem besitzt die folgenden Eigenschaften:
● Das Handterminal ist einem Prüfrechner fest zugeordnet.
● Das Handterminal liest eine Identnummer vom mobilen Diagnoseadapter 3 oder vom Prüfling 1 (Eingabe per Tastatur oder Scanner).
● Der Prüfrechner ordnet den Prüfling 1 entsprechend der Identifizierung zu.
● Die Identität des Messadapters 4 muss dem Prüfrechner per Tastatureingabe bekanntgegeben werden.

Nachteile dieser Lösung sind u. a.:
● Manuelle Eingabe von Zuordnungen erforderlich.
● Prüfer 6 muss das Handterminal tragen.
● Bindung des Prüfers 6 an einen Prüfling 1, da das Handterminal während der Zeit der Prüfung an den Prüfling 1 gebunden ist.

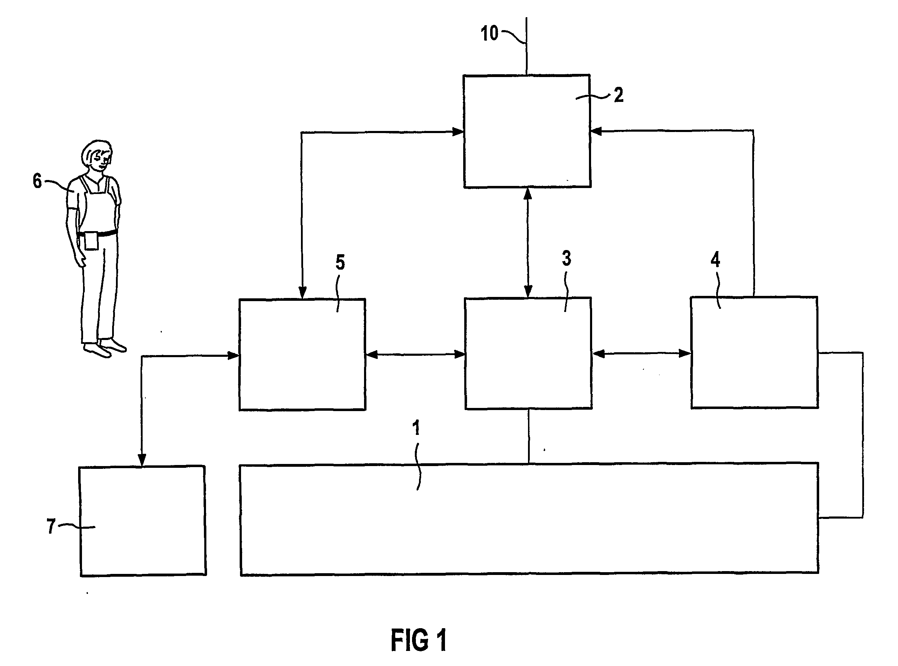

Im Lösungsansatz der Erfindung (siehe FIG 1) verschalten sich die Komponenten 2..5 temporär automatisch zu einem Prüfsystem für einen individuellen Prüfling 1. Der Prüfer 6 nutzt ein mobiles System 5, welches sensitiv bzgl. der individuellen Prüfsysteme reagiert, sich automatisch mit den einzelnen Prüfsystemen verbindet und damit zeitweise Bestandteil des jeweiligen Prüfsystems wird. Dies sowie die drahtlose Kommunikation zwischen allen Komponenten garantieren dem Prüfer 6 sowohl freie Beweglichkeit während der Prüfung eines Prüflings 1 als auch den problemlosen Wechsel zwischen Prüflingen 1 (z. B. Fahrzeugen).

Folgende Komponenten werden verwendet:
● Prüfrechner 2
   Der Prüfrechner 2 ermittelt aus der Identifikation des Prüflings 1 (z. B. Produktionsnummer) die individuellen technischen Eigenschaften des Prüflings 1 und generiert mit diesen Daten ein Prüfprogramm, welches er kooperativ mit den anderen Komponenten 2..5 und dem Prüfer 6 abarbeitet.
● Mobiler Rechner 5 mit Datenbrille, Headset und Scannerstift
   Der mobile Rechner 5 am Prüfer 6 ist für die Kommunikation zwischen Prüfer 6 und den restlichen Komponenten zuständig. Er ist extrem kompakt und mit Datenbrille, Headset und Scannerstift entweder per Kabel oder per Funk (z. B. Bluetooth) verbunden. Optional können weitere Peripheriekomponenten 7 nach demselben Verfahren an den mobilen Rechner 5 angekoppelt werden.
● Mobiler Diagnoseadapter 3
   Der mobile Diagnoseadapter 3 ist in jedem Prüfling 1 installiert, identifiziert den Prüfling 1 automatisch und stellt den Kontakt mit der Intelligenz des Prüflings 1 dar. Zusätzlich ist der mobile Diagnoseadapter 3 mit einem kleinen Display und einigen Funktionstasten ausgestattet, die es erlauben auch ohne mobilen Rechner 5 - mit eingeschränktem Bedienkomfort - Prüfungen durchzuführen.
● Messadapter 4
   Der Messadapter 4 nimmt elektrische Daten (z. B. Strom, Spannung) des Prüflings 1 auf und sendet sie kontinuierlich an den Prüfrechner 2.

Anhand FIG 1 wird im Folgenden der Ablauf einer Prüfung gemäß einer ersten Variante beschrieben. Im Beispiel ist der Prüfling ein Fahrzeug 1. Im ersten Schritt installiert der Prüfer 6 den mobilen Diagnoseadapter 3 im Fahrzeug 1. Dies kann entfallen, wenn der mobile Diagnoseadapter 3 schon installiert ist. Ein fest installierter Diagnoseadapter 3 kann während des gesamten Lebenszyklus eines Fahrzeugs, so z. B. während Produktion, Prüfung und Diagnose Daten vom Fahrzeug drahtlos an externe Systeme übermitteln. Der mobile Diagnoseadapter 3 identifiziert automatisch das Fahrzeug 1 (Auslesen des Fahrzeug-Steuergeräts) und verbindet sich selbstständig über drahtlose Funkkommunikation mit einem freien Prüfrechner 2. Optional ist die Identifikation des Prüflings 1 auch mit einem Scannerstift möglich. Im folgenden Schritt werden die bedienerlosen Prüfungen automatisch mittels einer Kooperation zwischen Prüfrechner 2 und mobilem Diagnoseadapter 3 gestartet. Der Prüfer 6 adaptiert den Messadapter 4 am Fahrzeug 1. Der Messadapter 4 identifiziert sich gegenüber dem mobilen Diagnoseadapter 3 drahtlos (z. B. Bluetooth) und wird automatisch in die Kooperation Prüfrechner 2 - mobiler Diagnoseadapter 3 eingebunden. Der Prüfer 6 setzt sich daraufhin in das Fahrzeug 1 bzw. begibt sich in die Nähe des im Fahrzeug 1 befindlichen mobilen Diagnoseadapters 3. Seine mobile Rechnereinheit 5 identifiziert sich automatisch und drahtlos (z. B. über Bluetooth) gegenüber dem mobilen Diagnoseadapter 3 und wird in die schon bestehende Kooperation der Prüfkomponenten eingebunden. Der Prüfer 6 empfängt schließlich über den mobilen Rechner 4 Anweisungen vom Prüfrechner 2. Die Anweisungen werden ihm in eine Datenbrille eingeblendet. Notwendige Quittierungen oder Bedienkommandos erfolgen entweder über ein am Prüfer 6 befindliches Interaktionsgerät oder durch Sprache.

Die Vorteile des beschriebenen Systems bestehen in den folgenden Punkten:
● Automatisches Zusammenfassen der Testkomponenten zu einem individuellen Prüfsystem (manuelle Zuordnungen per Tastatureingaben oder Scanner entfallen).
● Durch die Verwendung von Datenbrille und Headset hat der Prüfer 6 zu jedem Zeitpunkt der Prüfung beide Hände frei.
● Bewegungsfreiheit für den Benutzer 6
   Der Prüfer 6 ist im Umkreis des zu testenden Prüflings 1 frei beweglich und kann damit Aktionen innerhalb und außerhalb des Prüflings 1 ausführen.
● Wechsel zwischen Prüflingen 1 wird problemlos möglich, da sich die mobile Rechnereinheit 5 des Prüfers 6 automatisch auf den individuellen Prüfling 1 einstellt (siehe oben).
   Beim Wechsel werden dem Prüfer 6 die jeweils aktuellen Bedienungsanforderungen zum Prüfling 1 angezeigt. Die Möglichkeit des Prüflingswechsels ist besonders bei länger dauernden Prüfungen von großem Vorteil.

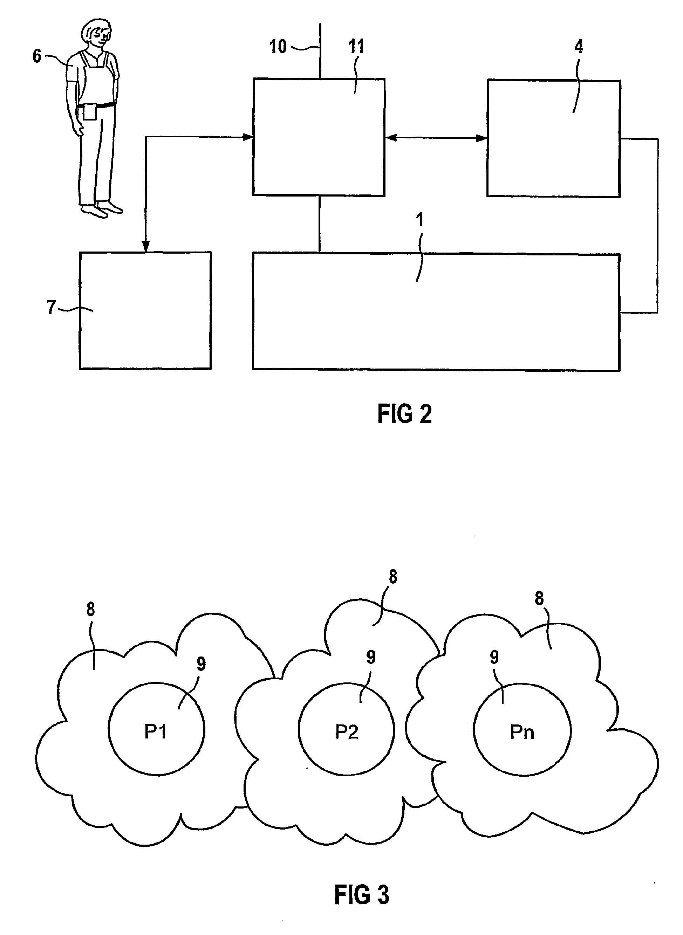

In einer zweiten Variante des Prüfsystems (vgl. FIG 2) werden die Funktionen des Prüfrechners 2, des mobilen Computers 5 und des mobilen Diagnoseadapters 3 in einer neuen Komponente, zu einem sogenannten mobilen Prüfsystem zusammengefasst. Die mobilen Peripheriegeräte 7 wie Datenbrille, Headset und Scannerstift verbleiben am Prüfer 1 und kommunizieren drahtlos mit dem mobilen Prüfsystem. Die Anbindung 10 an das Leitsystem erfolgt - im Gegensatz zur ersten Variante - über WLAN (wireless LAN). Der Ablauf einer Prüfung entspricht dem oben beschriebenen Ablauf der ersten Variante, wobei durch die Integration der Funktionalität jedoch bestimmte Koordinierungsaufgaben entfallen.

Vorteile der zweiten Variante:
● Der Prüfer 6 trägt nur die Peripheriegeräte 7 und keinen mobilen Rechner 5.
● Geringerer Geräteaufwand und damit Reduzierung der Kosten
● Einfachere Installation, Inbetriebsetzung und Betrieb

Im Folgenden wird der Wechsel zwischen Prüflingen 1 anhand FIG 3 genauer erläutert. Bei einem Bandbetrieb (z. B. Fahrzeugendmontage) überlappen sich die "Einzugsbereiche" der einzelnen Prüflinge 1 (FIG 3: Kommunikationsbereich 8 und Kernbereich 9). Dies führt zu einer Umschaltproblematik, die folgendermaßen gelöst wird: Es wird unterschieden zwischen einem Kernbereich 8 und einem Kommunikationsbereich 9. Für einen Wechsel des Prüflings 1 muss der Prüfer 6 in den Kernbereich 8 des Prüflings 1 eintauchen. Jedem Prüfsystem kann zu einem Zeitpunkt nur ein Prüfer 6 zugeordnet sein. Ist der Prüfer 6 in ein Prüfsystem für einen Prüfling 1 eingebunden, dann kann der Prüfer 6 sich im Kommunikationsbereich 9 des Prüflings 1 frei bewegen. Eine Überlappung mit den Kommunikationsbereichen 9 anderer Prüflinge 1 ist unproblematisch. Durch die Unterscheidung zwischen Identifikationsphase und Betriebsphase ergibt sich eine Hysterese, die zur Verringerung der Abstände zwischen den Prüflingen 1 genutzt werden kann. Ein Wechsel von einem Kernbereich 8 in einen anderen Kernbereich 8 muss vom Prüfer 6 quittiert werden, damit ein versehentliches Einbuchen in anderes Prüfsystem verhindert wird. Verlässt ein Prüfer 6 temporär den Kommunikationsbereich 9 eines Prüflings 1 und kommt wieder in den Kommunikationsbereich 9 zurück, dann wird er ohne Quittierungsnotwendigkeit wieder in das Prüfsystem seines alten Prüflings 1 aufgenommen. Einbuchungsvorgänge und Verlassen des Kommunikationsbereichs 9 werden dem Prüfer 6 visuell oder akustisch angezeigt.

Zusammenfassend betrifft die Erfindung somit ein System zur Generierung eines Prüfsystems mit Komponenten, die sich temporär automatisch zu einem Prüfsystem für einen individuellen Prüfling 1 verschalten, wobei der Prüfer 6 ein mobiles System 5 nutzt, welches sensitiv bzgl. der individuellen Prüfsysteme reagiert, sich automatisch mit den einzelnen Prüfsystemen verbindet und damit zeitweise Bestandteil des jeweiligen Prüfsystems wird, wobei eine drahtlose Kommunikation zwischen allen Komponenten dem Prüfer 6 sowohl freie Beweglichkeit während der Prüfung eines Prüflings 1 als auch den problemlosen Wechsel zwischen Prüflingen 1 garantieren.

## Patentansprüche

1. System zur Prüfung von Produkten, welche temporär als Prüfling (1) mit dem System verschaltbar sind, wobei das System folgendes aufweist:
- einen stationären Prüfrechner (2) zur Identifizierung des Prüflings (1) und seiner technischen Eigenschaften, zur Generierung und Durchführung eines Prüfprogramms in Abhängigkeit vom identifizierten Prüfling (1) und von seinen technischen Eigenschaften und zur Kommunikation mit
- einem mobilen Diagnoseadapter (3) im Prüfling (1) als Schnittstelle zwischen Prüfling (1) und stationärem Prüfrechner (2), mit
- einem Messadapter (4) zur Erfassung von Messdaten des Prüflings (1) und zur Übermittlung der Messdaten an den stationären Prüfrechner (2) und mit
- mindestens einer mobilen Rechnereinheit (5) zur Kommunikation zwischen einem Prüfer (6) und den Komponenten (1..4) des Systems,
wobei eine für die Dauer der Prüfung bestehende Verschaltung zwischen dem Prüfling (1), dem stationären Prüfrechner (2), dem mobilen Diagnoseadapter (3), dem Messadapter (4) und der mobilen Rechnereinheit (5) vorgesehen ist, und wobei die mobile Rechnereinheit (5) beim Prüflingswechsel auf den individuellen Prüfling (1) automatisch einstellbar ist.

2. System nach Anspruch 1,
**dadurch gekennzeichnet,**
**dass** der Prüfrechner (2), der mobile Diagnoseadapter (3) und die mobile Rechnereinheit (5) als mobiles Prüfsystem (11) in einer baulichen Einheit zusammengefasst werden und dass mobile Peripheriegeräte (7) als Schnittstelle zwischen dem mobilen Prüfsystem (10) und dem Prüfer (6) vorgesehen sind.

3. System nach Anspruch 1 oder 2,
**dadurch gekennzeichnet,**
**dass** ein einem Prüfling (1) zugeordneter Kommunikationsbereich (8) und ein Kernbereich (9) innerhalb des Kommunikationsbereichs (8) vorgesehen ist, wobei ein Wechsel der Verschaltung der mobilen Rechnereinheit (5) nur innerhalb des Kernbereichs (9) vorgesehen ist und wobei eine Kommunikation zwischen der mobilen Rechnereinheit (5) und dem temporär verschaltbaren System innerhalb des Kommunikationsbereichs (8) vorgesehen ist.

4. System nach einem der vorhergehenden Ansprüche,
**dadurch gekennzeichnet,**
**dass** der mobile Diagnoseadapter (3) Ein- und Ausgabemittel zum Bedienen und Beobachten des mobilen Diagnoseadapters (3) enthält.

5. Verfahren zur Prüfung von temporär als Prüfling (1) mit dem System verschaltbaren Produkten, bei welchem
- ein stationärer Prüfrechner (2) den Prüfling (1) und seine technischen Eigenschaften identifiziert, ein Prüfprogramm in Abhängigkeit vom identifizierten Prüfling (1) und von seinen technischen Eigenschaften generiert und durchführt und mit
- einem mobilen Diagnoseadapter (3) im Prüfling (1), als Schnittstelle zwischen Prüfling (1) und stationärem Prüfrechner (2), mit
- einem Messadapter (4) zur Erfassung von Messdaten des Prüflings (1) und zur Übermittlung der Messdaten an den stationären Prüfrechner (2) und mit
- einer mobilen Rechnereinheit (5) zur Kommunikation zwischen einem Prüfer (6) und den Komponenten (1..4) des Systems kommuniziert,
wobei der Prüfling (1), der Prüfrechner (2), der mobile Diagnoseadapter (3), der Messadapter (4) und die mobile Rechnereinheit (5) für die Dauer der Prüfung verschaltet werden, und wobei die mobile Rechnereinheit (5) beim Prüflingswechsel auf den individuellen Prüfling (1) automatisch eingestellt wird.

6. Verfahren nach Anspruch 5,
**dadurch gekennzeichnet,**
**dass** der Prüfrechner (2), der mobile Diagnoseadapter (3) und die mobile Rechnereinheit (5) als mobiles Prüfsystem (11) in einer baulichen Einheit zusammengefasst werden und dass mobile Peripheriegeräte (7) als Schnittstelle zwischen dem mobilen Prüfsystem (10) und dem Prüfer (6) verwendet werden.

7. Verfahren nach Anspruch 5 oder 6,
**dadurch gekennzeichnet,**
**dass** ein einem Prüfling (1) zugeordneter Kommunikationsbereich (8) und ein Kernbereich (9) innerhalb des Kommunikationsbereichs (8) vorgesehen ist, wobei die Verschaltung der mobilen Rechnereinheit (5) nur innerhalb des Kernbereichs (9) gewechselt wird und wobei die mobile Rechnereinheit (5) mit dem temporär verschaltbaren System innerhalb des Kommunikationsbereichs (8) kommuniziert.

8. Verfahren nach einem Ansprüche 5 bis 7,
**dadurch gekennzeichnet,**
**dass** der mobile Diagnoseadapter (3) mittels Ein- und Ausgabemitteln bedienbar und beobachtbar ist.

## Claims

1. System for testing products which are temporarily connected to the system as a test object (1), with the system having the following features:
- A stationary test processor (2) for identifying the test object (1) and its technical characteristics, for generation and execution of a test program depending on the test object identified (1) and its technical characteristics, and for communication with
- a mobile diagnosis adapter (3) in the test object (1) as interface between test object (1) and stationary test processor (2), with
- a measurement adapter (4) for detecting measurement data of the test object (1) and for transmission of the measurement data to the stationary test processor (2) and with
- at least one mobile processor unit (5) for communication between a tester (6) and the components (1..4) of the system,
with a connection, existing for the duration of the testing, being provided between the test object (1), the stationary test processor (2), the mobile diagnosis adapter (3), the measurement adapter (4) and the mobile processor unit (5), and with the mobile processor unit (5) being set automatically to the individual test object (1) when switching between test objects.

2. System according to claim 1,
**characterised in that**
the test processor (2), the mobile diagnosis adapter (3) and the mobile processor unit (5) are grouped together in one hardware unit as a mobile test system (11) and that mobile peripheral devices (7) are provided as the interface between the mobile test system (10) and the tester (6).

3. System according to claim 1 or 2,
**characterised in that**
a communication area (8) assigned to a test object (1) and a core area (9) within the communication area (8) are provided, with there being provision for a switchover of the connection of the mobile processor unit (5) only within the core area (9) and with there being provision for communication between the mobile processor unit (5) and the temporarily connectable system only within the communication area (8).

4. System according to one of the previous claims,
**characterised in that**
the mobile diagnosis adapter (3) contains input or output means for operating and observing the mobile diagnosis adapter (3).

5. Method for testing products temporarily able to be connected to the system as a test object (1), in which
- a stationary test processor (2) identifies the test object (1) and its technical characteristics, a test program is generated and executed depending on the test object (1) and its technical characteristics identified, and with
- a mobile diagnosis adapter (3) in the test object (1), as an interface between test object (1) and stationary test processor (2), with
- a measurement adapter (4) for detecting measurement data of the test object (1) and for transmission of the measurement data to the stationary test processor (2) and with
- a mobile processor unit (5) for communication between a tester (6) and the components (1..4) of the system,
with the test object (1), the test processor (2), the mobile diagnosis adapter (3), the measurement adapter (4) and the mobile processor unit (5) being connected for the duration of the testing and with the mobile processor unit (5) being set automatically on switchover of test object to the individual test object (1).

6. Method according to claim 5,
**characterised in that**,
the test processor (2), the mobile diagnosis adapter (3) and the mobile processor unit (5) are grouped together in one hardware unit as a mobile test system (11) and that mobile peripheral devices (7) are provided as the interface between the mobile test system (10) and the tester.

7. Method according to claim 5 or 6,
**characterised in that**,
a communication area (8) assigned to a test object (1) and a core area (9) within the communication area (8) are provided, with there being provision for a switchover of the connection of the mobile processor unit (5) only within the core area (9) and with the mobile processor unit (5) and the temporarily connectable system only communicating within the communication area (8).

8. Method according to one of the claims 5 to 7,
**characterised in that**,
the mobile diagnosis adapter (3) can be operated and observed using input and output means.

## Revendications

1. Système pour tester des produits qui peuvent être temporairement branchés comme échantillons (1) sur le système, le système comportant ce qui suit :
- un ordinateur stationnaire de test (2) pour identifier l'échantillon (1) et ses propriétés techniques, pour produire et exécuter un programme de test en fonction de l'échantillon identifié (1) et de ses propriétés techniques et pour communiquer avec
- un adaptateur mobile de diagnostic (3) dans l'échantillon (1) comme interface entre l'échantillon (1) et l'ordinateur stationnaire de test (2), avec
- un adaptateur de mesure (4) pour détecter des données mesurées de l'échantillon (1) et pour transmettre les données mesurées à l'ordinateur stationnaire de test (2) et avec
- au moins un ordinateur mobile (5) pour communiquer entre un contrôleur (6) et les composants (1 à 4) du système,
un branchement existant pour la durée du test étant alors prévu entre l'échantillon (1), l'ordinateur stationnaire de test (2), l'adaptateur mobile de diagnostic (3), l'adaptateur de mesure (4) et l'ordinateur mobile (5) et l'ordinateur mobile (5) étant réglable automatiquement, lors du changement d'échantillon, sur l'échantillon individuel (1).

2. Système selon la revendication 1,
**caractérisé par le fait que** l'ordinateur stationnaire de test (2), l'adaptateur mobile de diagnostic (3) et l'ordinateur mobile (5) sont réunis en tant que système mobile de test (11) dans une unité de construction et que des appareils périphériques mobiles (7) sont prévus comme interface entre le système mobile de test (10) et le contrôleur (6).

3. Système selon la revendication 1 ou 2,
**caractérisé par le fait qu'**il est prévu une zone de communication (8) associée à un échantillon (1) et une zone centrale (9) à l'intérieur de la zone de communication (8), un changement du branchement de l'ordinateur mobile (5) étant prévu seulement à l'intérieur de la zone centrale (9) et une communication entre l'ordinateur mobile (5) et le système qui peut être branché temporairement étant prévue à l'intérieur de la zone de communication (8).

4. Système selon l'une des revendications précédentes,
**caractérisé par le fait que** l'adaptateur mobile de diagnostic (3) contient des moyens d'entrée et de sortie pour la commande et l'observation de l'adaptateur mobile de diagnostic (3).

5. Procédé pour tester des produits pouvant être branchés temporairement comme échantillons (1) sur le système, dans lequel
- un ordinateur stationnaire de test (2) identifie l'échantillon (1) et ses propriétés techniques, produit et exécute un programme de test en fonction de l'échantillon identifié (1) et de ses propriétés techniques et communique avec
- un adaptateur mobile de diagnostic (3) dans l'échantillon (1) comme interface entre l'échantillon (1) et l'ordinateur stationnaire de test (2), avec
- un adaptateur de mesure (4) pour détecter des données mesurées de l'échantillon (1) et pour transmettre les données mesurées à l'ordinateur stationnaire de test (2) et avec
- un ordinateur mobile (5) pour communiquer entre un contrôleur (6) et les composants (1 à 4) du système,
l'échantillon (1), l'ordinateur de test (2), l'adaptateur mobile de diagnostic (3), l'adaptateur de mesure (4) et l'ordinateur mobile (5) étant branchés ensemble pour la durée du test et l'ordinateur mobile (5) étant réglé automatiquement, lors du changement d'échantillon, sur l'échantillon individuel (1).

6. Procédé selon la revendication 5,
**caractérisé par le fait que** l'ordinateur de test (2), l'adaptateur mobile de diagnostic (3) et l'ordinateur mobile (5) sont réunis en tant que système mobile de test (11) dans une unité de construction et que des appareils périphériques mobiles (7) sont utilisés comme interface entre le système mobile de test (10) et le contrôleur (6).

7. Procédé selon la revendication 5 ou 6,
**caractérisé par le fait qu'**il est prévu une zone de communication (8) associée à un échantillon (1) et une zone centrale (9) à l'intérieur de la zone de communication (8), le branchement de l'ordinateur mobile (5) étant changé seulement à l'intérieur de la zone centrale (9) et l'ordinateur mobile (5) qui peut communiquer avec le système pouvant être branché temporairement à l'intérieur de la zone de communication (8).

8. Procédé selon l'une des revendications 5 à 7,
**caractérisé par le fait que** l'adaptateur mobile de diagnostic (3) peut être commandé et observé par des moyens d'entrée et de sortie.
